# EUROPÄISCHE PATENTSCHRIFT

(11) **EP 2 864 631 B1**
(45) Veröffentlichungstag und Bekanntmachung des Hinweises auf die Patenterteilung: **13.01.2021**
(21) Anmeldenummer: 13727864.4
(22) Anmeldetag: 04.06.2013
(51) Int. Cl.: F03D 7/02, F03D 7/04, F03D 9/25, H02J 3/38

(54) **WINDPARK MIT MEHREREN NETZEINSPEISEPUNKTEN**
WIND FARM HAVING A PLURALITY OF NETWORK FEED-IN POINTS
PARC ÉOLIEN COMPRENANT PLUSIEURS POINTS D'ALIMENTATION DU RÉSEAU

(30) Priorität: 22.06.2012 DE 102012210613
(43) Veröffentlichungstag der Anmeldung: 29.04.2015
(73) Patentinhaber: Senvion GmbH, 22297 Hamburg (DE)
(72) Erfinder: SCHUBERT, Matthias, 24768 Rendsburg (DE)
(74) Vertreter: Glawe, Delfs, Moll
(86) Internationale Anmeldenummer: PCT/EP2013/061513
(87) Internationale Veröffentlichungsnummer: WO 2013/189733

(56) Entgegenhaltungen:
- WO-A2-2011/070146
- WO-A2-2012/048012
- DE-A1- 10 136 974
- US-A1- 2010 156 189
- CHAUDHARY S K ET AL: "Wind Farm Grid Integration Using VSC Based HVDC Transmission - An Overview", ENERGY 2030 CONFERENCE, 2008. ENERGY 2008. IEEE, IEEE, PISCATAWAY, NJ, USA, 17. November 2008 (2008-11-17), Seiten 1-7, XP031442506, ISBN: 978-1-4244-2850-2

## Beschreibung

Die Erfindung betrifft einen Windpark sowie ein Verfahren zum Betreiben eines erfindungsgemäßen Windparks.

Windparks umfassen mehrere Windenergieanlagen, die Windenergie mithilfe eines Rotors und einen damit verbundenen Generator in elektrische Energie umwandeln. Die elektrische Energie gelangt über einen Umrichterin ein windparkinternes Netz und von dort aus über einen Netzeinspeisepunkt in ein Versorgungsnetz. Am Netzeinspeisepunkt ist eine Regelungseinrichtung vorgesehen, die verschiedene Messwerte am Netzeinspeisepunkt, wie zum Beispiel Spannungen oder Stromstärke, erfasst und so auf die Windenergieanlagen einwirkt, dass am Netzeinspeisepunkt vorgegebene Sollwerte, beispielsweise hinsichtlich der Wirkleistung und/oder Blindleistung, erreicht werden. Die zu erreichenden Sollwerte können von der Regelungseinrichtung selbst ermittelt oder von einer übergeordneten Instanz, beispielsweise dem Netzbetreiber, vorgegeben werden.

In DE 101 36 974 ist ein Windpark mit mehreren windparkinternen Teilnetzen bekannt. Aus jedem der windparkinternen Teilnetze kann über jeweils einen Netzeinspeisepunkt Leistung in Teilbereiche des Versorgungsnetzes eingespeist werden. Werden die Teilbereiche des Versorgungsnetzes über eine Schaltvorrichtung miteinander verbunden, so werden auch die Regelungseinrichtungen an den Netzeinspeisepunkten miteinander verbunden, damit die Regelung der über die jeweiligen Netzeinspeisepunkte in das Versorgungsnetz eingespeiste Leistung aufeinander abgestimmt werden kann.

Aus DE 10 2008 028 573 ist bekannt, redundante Regelungseinrichtungen an einem Netzeinspeisepunkt vorzusehen. Fällt eine Regelungseinrichtung aus, kann eine zweite Regelungseinrichtung die Aufgaben der ausgefallenen Regelungseinrichtung übernehmen.

Nachteilig an diesem Stand der Technik ist, dass bei Ausfall eines Netzeinspeisepunktes die mit diesem Netzeinspeisepunkt verbundenen Windenergieanlagen keine elektrische Energie mehr an das Versorgungsnetz abgeben können und stillgesetzt werden müssen.

Aufgabe der vorliegenden Erfindung ist es, einen Windpark sowie ein Verfahren zum Betreiben eines Windparks zu schaffen, bei dem die Nachteile aus dem Stand der Technik nicht mehr oder nur noch im verminderten Umfang auftreten.

Diese Aufgabe wird gelöst durch einen Windpark gemäß dem Hauptanspruch sowie ein Verfahren gemäß dem nebengeordneten Anspruch. Vorteilhafte Weiterbildungen sind Gegenstand der abhängigen Ansprüche.

Demnach betrifft die Erfindung einen Windpark umfassend mehrere, mit einem windparkinternen Netz verbundene Windenergieanlagen, wobei am windparkinternen Netz ein Netzeinspeisepunkt zur Einspeisung von elektrischer Leistung in ein Versorgungsnetz vorgesehen ist, und wobei eine dem Netzeinspeisepunkt zugeordnete Regelungseinrichtung vorgesehen ist, die zur Regelung der über den Netzeinspeisepunkt Leistung in das Versorgungsnetz einspeisende Windenergieanlagen anhand von am Netzeinspeisepunkt erfassten Messwerten ausgebildet ist, wobei wenigstens ein weiterer Netzeinspeisepunkt mit einer weiteren Regelungseinrichtung vorgesehen ist, die zur Regelung der, über den weiteren Netzeinspeisepunkt Leistung in das Versorgungsnetz einspeisende Windenergieanlagen anhand von am weiteren Netzeinspeisepunkt erfassten Messwerten ausgebildet ist, wobei das windparkinterne Netz wenigstens ein Schaltelement umfasst, welches dazu ausgebildet ist, wenigstens eine Windenergieanlage mit wahlweise jeweils einem der mehreren Netzeinspeisepunkte variabel zu verbinden.

Die Erfindung betrifft weiterhin ein Verfahren zum Betreiben eines Windparks, wobei der Windpark mehrere, mit einem windparkinternem Netz verbundene Windenergieanlagen und wenigstens zwei Netzeinspeisepunkte umfasst und das windparkinterne Netz wenigstens ein Schaltelement umfasst, welches dazu ausgebildet ist, wenigstens eine Windenergieanlage mit wahlweise einem der Netzeinspeisepunkte variabel zu verbinden, wobei eine Windenergieanlage anhand von Messwerten, die an einem ersten Netzeinspeisepunkt erfasst werden, geregelt wird, solange die Windenergieanlage über diesen ersten Netzeinspeisepunkt Leistung in ein Versorgungsnetz einspeist, und diese Windenergieanlage anhand von Messwerten, die an einem zweiten Netzeinspeisepunkt erfasst werden, geregelt wird, sobald die Windenergieanlage über diesen zweiten Netzeinspeisepunkt Leistung in das Versorgungsnetz einspeist.

Zunächst werden einige im Rahmen der Erfindung verwendete Begriffe erläutert.

"Netzeinspeisepunkte" im Sinne dieser Erfindung bezeichnet den Punkt, an dem das windparkinterne Netz in das Versorgungsnetz übergeht. An den Netzeinspeisepunkten können Vorrichtungen wie Transformatoren, welche die Spannung aus dem windparkinternen Netz auf die Spannung des Versorgungsnetzes transformieren, oder Messeinrichtungen vorgesehen sein. Netzeinspeisepunkte können geographisch bzw. räumlich voneinander getrennt angeordnet sein. Es ist aber auch möglich, dass mehrere Netzeinspeisepunkte räumlich nah bzw. nebeneinander angeordnet sind. Beispielsweise ist es möglich, dass in einem Gebäude nebeneinander mehrere Transformatoren angeordnet sind, die jeweils die Spannung aus dem windparkinternen Netz auf die Spannung des Versorgungsnetzes transformieren können. In diesem Fall kann jeder einzelne Transformator an einem einzelnen Netzeinspeisepunkt angeordnet sein.

"Variables Verbinden mit wahlweise einem der mehreren Netzeinspeisepunkte" bedeutet, dass eine derart angeschlossene Windenergieanlage ihre elektrische Leistung wahlweise über einen von mehreren Netzeinspeisepunkten in das Versorgungsnetz einspeisen kann. Eine entsprechende Windenergieanlage kann die von ihr erzeugte elektrische Leistung also wahlweise über einen ersten Netzeinspeisepunkt, über einen zweiten Netzeinspeisepunkt, usw. in das Versorgungsnetz einspeisen. Dabei ist nicht zwingend erforderlich, dass eine Windenergieanlage die von ihr erzeugte elektrische Leistung über alle Netzeinspeisepunkte in einem Windpark einspeisen kann. Es ist ausreichend, wenn eine Windenergieanlage wahlweise mit wenigstens zwei Netzeinspeisepunkten von mehreren verbunden werden kann. Eine einzige schaltbare feste Verbindung, mit der eine Windenergieanlage mit einem einzigen Netzeinspeisepunkt fest verbunden ist und gegebenenfalls von diesem getrennt werden kann, ermöglicht jedoch kein "variables Verbinden mit wahlweise einem der mehreren Netzeinspeisepunkte" im Sinne der Erfindung.

Die Erfindung bietet den Vorteil, dass die einzelnen Windenergieanlagen in einem Windpark die von ihnen erzeugte Leistung über verschiedene, frei wählbaren Wege, nämlich über die verschiedenen Netzeinspeisepunkte, in das Versorgungsnetz einspeisen können. So ist es möglich, dass bei Ausfall eines Netzeinspeisepunktes die an sich über diesen Netzeinspeisepunkt in das Versorgungsnetz eingespeiste Leistung über einen anderen Netzeinspeisepunkt in das Versorgungsnetz umgeleitet werden kann. Die mit dem ausgefallenen Netzeinspeisepunkt verbundenen Windenergieanlagen müssen in diesem Fall nicht abgeschaltet werden, sondern können durch eine Veränderung der Verbindung im windparkinternen Netz die von ihnen erzeugte elektrische Leistung über einen anderen Netzeinspeisepunkt in das Versorgungsnetz einspeisen. Die Funktion eines ausgefallenen Netzeinspeisepunktes kann also von einem anderen Netzeinspeisepunkt übernommen werden.

Neben dem variablen Verbinden der Windenergieanlagen mit wahlweise einem der Netzeinspeisepunkte ist es erfindungsgemäß vorgesehen, dass die Regelung der einzelnen Windenergieanlagen immer anhand von Messgrößen erfolgt, die an demjenigen Netzeinspeisepunkt erfasst werden, über den eine Windenergieanlage ihre elektrische Leistung auch tatsächlich in das Versorgungsnetz einspeist. Dies ist zum Einen erforderlich, damit die einem Netzeinspeisepunkt zugeordnete Regelungseinrichtung die für den Netzeinspeisepunkt vorgesehenen Sollwerten auch tatsächlich einregeln kann, zum Anderen wird dadurch vermieden, dass eine Regelungseinrichtung, die einem Netzeinspeisepunkt zugeordnet ist, über den keine elektrische Leistung in das Versorgungsnetz eingespeist wird, versucht, Windenergieanlagen anhand nichtssagender Messwerte zu regeln. Die Regelungseinrichtungen können die Windenergieanlagen auch so regeln, dass an dem ihr zugeordneten Netzeinspeisepunkt festgelegte Maximalwerte für die Leistung, den Strom und/oder die Spannung - wie sie z. B. durch Komponenten wie Transformatoren am Netzeinspeisepunkte vorgegeben sein können - nicht überschritten werden.

Damit eine Regelungseinrichtung die ihr zugeordneten Windenergieanlagen bestmöglich regeln kann, ist es erforderlich, dass die Regelungseinrichtung über Informationen verfügt, welche Gesamtnennleistung und/oder Gesamtnennblindleistung die Windenergieanlagen aufweisen, die ihre elektrische Leistung über den der Regelungseinrichtung zugeordneten Netzeinspeisepunkt einspeisen. Diese Information kann den Regelungseinrichtungen durch eine übergeordnete Instanz, beispielsweise einem Steuerungscomputer, zur Verfügung gestellt werden. Der Steuerungscomputer verfügt dabei über Informationen betreffend die Topographie des Windparks sowie die Schaltzustände des windparkinternen Netzes bzw. der Verbindungen der einzelnen Windenergieanlagen mit den Netzeinspeisepunkten. Anhand dieser Informationen ist es dem Steuerungscomputer möglich, die Gesamtnennleistung und/oder die Gesamtnennblindleistung der an einem bestimmten Netzeinspeisepunkt angebundenen Windenergieanlagen zu bestimmen und der diesem Netzeinspeisepunkt zugeordneten Regelungseinrichtung zu übermitteln.

Alternativ ist es möglich, dass die Regelungseinrichtungen zur automatischen Berechnung der Gesamtnennleistung und/oder der Gesamtnennblindleistung der an den ihnen jeweils zugeordneten Netzeinspeisepunkten verbundenen Windenergieanlagen ausgebildet sind. Die Regelungseinrichtungen können dabei dazu ausgebildet sein, die Nennleistungen der entsprechenden Windenergieanlagen abzufragen und zu der Gesamtnennleistung und/oder der Gesamtnennblindleistung, welche für die Regelung der Einzelwindenergieanlagen erforderlich ist, zusammenzufassen. Die automatische Berechnung der Gesamtnennleistung und/oder der Gesamtnennblindleistung kann dabei auf ein äußeres Signal hin, beispielsweise von einem übergeordneten Steuerungscomputer, oder in festgelegten Zeitabständen erfolgen.

Es ist besonders bevorzugt, wenn die Regelungseinrichtungen zur automatischen Berechnung der Gesamtnennleistung und/oder der Gesamtnennblindleistung der an den ihnen jeweils zugeordneten Netzeinspeisepunkten verbundenen Windenergieanlagen bei Änderung der Verbindung wenigstens einer Windenergieanlage mit den Netzeinspeisepunkten des Windparks ausgebildet ist. Die Regelungseinrichtung ist also dazu ausgebildet, Veränderungen bei den Verbindungen der Windenergieanlagen mit den Netzeinspeisepunkten zu erkennen und daraufhin eine Neuberechnung der Gesamtnennleistung und/oder der Gesamtnennblindleistung durchzuführen. Der Windpark wird dadurch weiter automatisiert. Die Änderung der Verbindung der Windenergieanlagen mit den Netzeinspeisepunkten kann beispielsweise anhand von Sensoren, welche die Schaltzustände einzelner Schaltelemente im windparkinternen Netz überwachen, oder anhand von plötzlichen Änderungen von am Netzeinspeisepunkt erfassten Messwerten erkannt werden.

Die Regelungseinrichtungen an den einzelnen Netzeinspeisepunkten sind bevorzugt so ausgelegt, dass sie anhand von Sollwerten für die Blindleistung und/oder Wirkleistung auf die Steuerung der über den jeweiligen Netzeinspeisepunkt in das Versorgungsnetz einspeisende Windenergieanlagen einwirken bzw. deren Leistungsabgabe regeln. Dabei ist es bevorzugt, wenn die Gesamtnennleistung der mit diesem Netzeinspeisepunkt verbundenen Windenergieanlagen berücksichtigt wird.

Es ist weiter bevorzugt, wenn die Regelungseinrichtungen zum Senden von Sollwerten an die und/oder zum Empfang von Informationen von den an den ihnen jeweils zugeordneten Netzeinspeisepunkten verbundenen Windenergieanlagen ausgebildet sind.

Um größtmögliche Flexibilität im Windpark zu erreichen, ist es bevorzugt, wenn alle Windenergieanlagen des Windparks wahlweise mit einem der mehreren Netzeinspeisepunkte, vorzugsweise mit einem von allen Netzeinspeisepunkten, verbindbar sind. Es ist aber auch möglich, dass mehrere Windenergieanlagen zu einer Gruppe zusammengefasst sind, wobei diese Gruppe dann variabel mit wahlweise einem der mehreren Netzeinspeisepunkte verbindbar ist.

Zur Erläuterung des erfindungsgemäßen Verfahrens wird auf die obenstehenden Ausführungen betreffend den erfindungsgemäßen Windpark verwiesen.

Die Erfindung wird nun anhand einer beispielhaften Ausführungsform unter Bezugnahme auf die beigefügte Zeichnung erläutert. Es zeigt:

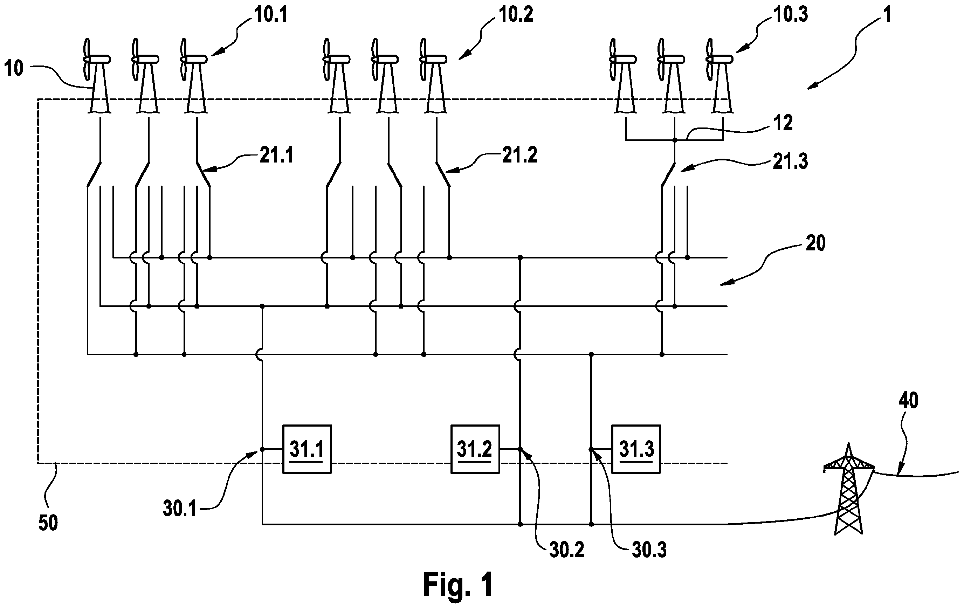

- Figur 1:: einen erfindungsgemäßen Windpark.

In Figur 1 ist ein erfindungsgemäßer Windpark 1 dargestellt. Der Windpark 1 umfasst mehrere Windenergieanlagen 10, die über ein windparkinternes Netz 20 mit einem elektrischen Versorgungsnetz 40 verbunden sind. Die Windenergieanlagen 10 umfassen einen Rotor, der - durch Wind in Rotation versetzt - einen Generator antreibt. Die vom Generator erzeugte elektrische Leistung wird, ggf. über einen Umrichter, in das windparkinterne Netz 20 eingespeist. Die elektrische Leistung gelangt dann von dem windparkinternen Netz 20 an einen Netzeinspeisepunkt 30.1, 30.2, 30.3 in das elektrische Versorgungsnetz 40.

Im dargestellten Ausführungsbeispiel, welches lediglich eine schematische Darstellung der Erfindung widerspiegelt, sind am windparkinternen Netz 20 drei Netzeinspeisepunkte 30.1, 30.2, 30.3 vorgesehen. Das windparkinterne Netz 20 ist dabei so ausgebildet, dass die einzelnen Windenergieanlagen 10 wahlweise mit einem der mehreren Netzeinspeisepunkte 30.1, 30.2, 30.3 verbunden werden können.

Die Windenergieanlagen 10 einer ersten Gruppe von Windenergieanlagen 10.1 können dabei individuell wahlweise mit einem der drei Netzeinspeisepunkte 30.1, 30.2, 30.3 verbunden werden. Dazu sind entsprechende Schaltelemente 21.1 im windparkinternen Netz 20 vorgesehen.

Bei einer zweiten Gruppe von Windenergieanlagen 10.2. lassen sich die einzelnen Windenergieanlagen 10 jeweils wahlweise mit zwei der drei verfügbaren Netzeinspeisepunkte 30.1, 30.2, 30.3 verbinden. Die dafür erforderlichen Schaltelemente 21.2 können einfacher ausgestaltet sein als diejenigen für die erste Gruppe von Windenergieanlagen 10.1, d. h. Schaltelemente 21.1. Allerdings wird durch die Verwendung der einfacheren Schaltelemente 21.2 die Flexibilität der möglichen Schaltungen eingeschränkt. So ist es bei der zweiten Gruppe von Windenergieanlagen 10.2 nicht mehr möglich, jede der Windenergieanlagen 10 beliebig mit einem der drei Netzeinspeisepunkte 30.1, 30.2, 30.3 zu verbinden.

Die Windenergieanlagen 10 der dritten Gruppe von Windenergieanlagen 10.3 sind über eine Stromschiene 12 zusammengefasst. Ausgehend von dieser Stromschiene 12 ist ein einzelnes Schaltelement 21.3 vorgesehen, um die Windenergieanlagen 10 der Gruppe von Windenergieanlagen 10.3 gemeinsam wahlweise mit einem der drei Netzeinspeisepunkte 30.1, 30.2, 30.3 zu verbinden.

An den einzelnen Netzeinspeisepunkten 30.1, 30.2, 30.3 ist jeweils eine Regelungseinrichtung 31.1, 31.2, 31.3 vorgesehen. Außerdem werden an den einzelnen Netzeinspeisepunkten 30.1, 30.2, 30.3 Messgrößen betreffend die dort jeweils in das elektrische Versorgungsnetz 40 eingespeiste elektrische Leistung erfasst, die dann von den Regelungseinrichtungen 31.1, 31.2, 31.3, die den entsprechenden Netzeinspeisepunkten 30.1, 30.2, 30.3 zugeordnet sind, weiter verarbeitet werden.

Die Regelungseinrichtungen 31.1, 31.2, 31.3 sind dazu ausgebildet, diejenigen Windenergieanlagen 10, die ihre elektrische Leistung über den, der jeweiligen Regelungseinrichtung 31.1, 31.2, 31.3 zugeordneten Netzeinspeisepunkt 30.1, 30.2, 30.3 in das Versorgungsnetz 40 einspeisen, zu regeln. Dabei können die Windenergieanlagen 10 derart geregelt werden, dass an dem jeweiligen Netzeinspeisepunkt 30.1, 30.2, 30.3, über den sie ihre elektrische Leistung einspeisen, gewünschte Blind- und/oder Wirkleistungswerte erreicht werden. Entsprechende Regelungen von mehreren Windenergieanlagen 10, die über einen gemeinsamen Netzeinspeisepunkt" 30 ihre elektrische Leistung in ein Versorgungsnetz 40 einspeisen, sind bekannt. Die Sollwerte für die Blind- und/oder Wirkleistung können dabei vom Betreiber des Versorgungsnetzes 40 über eine Datenfernübertragungsleitung (nicht dargestellt) an die Regelungseinrichtungen 31.1, 31.2, 31.3 übermittelt werden.

Die Regelungseinrichtungen 31.1, 31.2, 31.3 sowie die Windenergieanlagen 10 sind über ein Datenübertragungsnetz 50 miteinander verbunden. Über dieses Datenübertragungsnetz 50 können die Regelungseinrichtungen 31.1, 31.2, 31.3 auf die Steuerung der einzelnen Windenergieanlagen 10 einwirken. Dabei wirken die Regelungseinrichtungen 31.1, 31.2, 31.3 nur auf diejenigen Windenergieanlagen 10 ein, deren elektrische Leistung über denen einer Regelungseinrichtung 31.1, 31.2, 31.3 zugeordneten Netzeinspeisepunkt 30.1, 30.2, 30.3 in das elektrische Versorgungsnetz 40 gelangt.

Damit die Regelungseinrichtungen 31.1, 31.2, 31.3 die ihnen jeweils zugeordneten Windenergieanlagen 10 möglichst optimal ansteuern kann, ist es erforderlich, dass die Regelungseinrichtung 31.1, 31.2, 31.3 über Informationen verfügt, welche Gesamtnennleistung und/oder Gesamtblindnennleistung die ihr zugeordneten Windenergieanlagen 10 aufweisen. Nur so ist es möglich, jede der Windenergieanlagen 10 optimal zu steuern, damit die gewünschten Blind- und/oder Wirkleistungswerte an ein Netzeinspeisepunkt 30.1, 30.2, 30.3 erreicht werden. Zur Berechnung der Gesamtnennleistung und/oder der Gesamtblindnennleistung aller einem Netzeinspeisepunkt 30.1, 30.2, 30.3 zugeordneten Windenergieanlagen 10 können diese Windenergieanlagen 10 ihre Leistungswerte über das Datenübertragungsnetz 50 an die dem jeweiligen Netzeinspeisepunkt 30.1, 30.2, 30.3 zugeordnete Regelungseinrichtung 31.1, 31.2, 31.3 übermitteln. Durch Addition der einzelnen Leistungswerte der Windenergieanlagen 10 kann die Regelungseinrichtung 31.1, 31.2, 31.3 dann die Gesamtnennleistung bestimmen und bei der Regelung berücksichtigen.

Sofern sich die Schaltzustände der Schaltelemente 21.1,21.2,21.3 ändern - eine Windenergieanlage 10 ihre Leistung also nicht mehr über einen ersten Netzeinspeisepunkt sondern über einen zweiten Netzeinspeisepunkt in das elektrische Versorgungsnetz 40 einspeist - ändert sich auch die Gesamtnennleistung und/oder die Gesamtblindnennleistung an den einzelnen Netzeinspeisepunkten 30.1, 30.2, 30.3. Die Regelungseinrichtungen 31.1, 31.2, 31.3 sind dazu ausgebildet, in einem solchen Fall die Änderung der jeweiligen Gesamtnennleistung und/oder der Gesamtblindnennleistung der ihr zugeordneten Netzeinspeisepunkte 30.1,30.2,30.3 neu zu bestimmen. Dazu erhalten sie von der, die Schaltelemente 21.1,21.2,21.3 steuernden Steuerungsvorrichtung (nicht dargestellt) ein elektronisches Signal, welches die Umschaltung wenigstens eines der Schaltelemente 21.1, 21.2, 21.3 anzeigt. Die einzelnen Regelungseinrichtungen 31.1, 31.2, 31.3 berechnen dann auf die angegebene Weise die jeweilige Gesamtnennleistung und/oder der Gesamtblindnennleistung erneut. So ist gewährleistet, dass die Regelungseinrichtungen 31.1, 31.2, 31.3 die Steuerung der ihr zugeordneten Windenergieanlagen 10 immer anhand der Gesamtnennleistung und/oder der Gesamtblindnennleistung der derzeit mit dem ihr zugeordneten Netzeinspeisepunkt 30.1, 30.2, 30.3 verbundenen Windenergieanlagen 10 erfolgt.

Beim Ändern der Schaltzustände der Schaltelemente 21.1, 21.2, 21.3 muss gewährleistet werden, dass derjenige Netzeinspeisepunkt 30.1, 30.2, 30.3, über den die Leistung von einer oder mehrerer Windenergieanlagen umgeleitet werden soll, für die dann anfallende Gesamtnennleistung und/oder Gesamtblindnennleistung ausgelegt ist. Dies kann von der die Schaltelemente 21.1, 21.2, 21.3 steuernden Steuerungsvorrichtung (nicht dargestellt) gewährleistet werden, wenn diese über Informationen betreffend die Topologie des windparkinternen Netzes und die Nennleistung bzw. Nennblindleistung der einzelnen Windenergieanlagen verfügt. Alternativ ist es möglich, dass die Regelungseinrichtung 31.1, 31.2, 31.3 die ihr zugeordneten Windenergieanlagen 10 derart regelt, dass die an dem Netzeinspeisepunkt 30.1, 30.2, 30.3 der jeweiligen Regelungseinrichtung 31.1, 31.2, 31.3 nur soviel Leistung in das elektrische Versorgungsnetz 40 einspeisen, dass die maximal zulässige Leistung eines Netzeinspeisepunktes 30.1, 30.2, 30.3 nicht überschritten wird.

Sofern der Schaltvorgang der Schaltelemente 21.1, 21.2, 21.3 und die Übergabe der Regelung einer oder mehrerer Windenergieanlagen 10 von einer ersten auf eine zweite Regelungseinrichtung 31.1, 31.2, 31.3 nicht augenblicklich erfolgt oder erfolgen kann, kann vorgesehen sein, dass die jeweiligen Windenergieanlagen für die entsprechende Zeitspanne mit Standardwerten betrieben werden . So kann sichergestellt werden, dass die Windenenergieanlagen 10 auch in den Zeiten, in denen sie nicht von einer Regelungseinrichtung 31.1, 31.2, 31.3 geregelt werden (bspw. während oder direkt nach dem Ändern der Schaltzustände der Schaltelemente 21.1, 21.2, 21.3) geregelt betrieben werden können .

## Patentansprüche

1. Windpark (1) umfassend mehrere, mit einem windparkinternen Netz (20) verbundene Windenergieanlagen (10), wobei am windparkinternen Netz (20) ein Netzeinspeisepunkt (30.1) zur Einspeisung von elektrischer Leistung in ein Versorgungsnetz (40) vorgesehen ist, und wobei eine dem Netzeinspeisepunkt (30.1) zugeordnete Regelungseinrichtung (31.1) vorgesehen ist, die zur Regelung der über den Netzeinspeisepunkt (30.1) Leistung in das Versorgungsnetz (40) einspeisende Windenergieanlagen (10) anhand von am Netzeinspeisepunkt (30.1) erfassten Messwerten ausgebildet ist, wobei wenigstens ein weiterer Netzeinspeisepunkt (30.2, 30.3) mit einer weiteren Regelungseinrichtung (31.2, 31.3) vorgesehen ist, die zur Regelung der, über den weiteren Netzeinspeisepunkt (30.2, 30.3) Leistung in das Versorgungsnetz (40) einspeisende Windenergieanlagen (10) anhand von am weiteren Netzeinspeisepunkt (30.2, 30.3) erfassten Messwerten ausgebildet ist, wobei das windparkinterne Netz (20) wenigstens ein Schaltelement (21.1) umfasst,
**dadurch gekennzeichnet, dass**
das Schaltelement (21.1) dazu ausgebildet ist, wenigstens eine Windenergieanlage (10) mit wahlweise jeweils einem der mehreren Netzeinspeisepunkte (30.1, 30.2, 30.3) variabel zu verbinden.

2. Windpark nach Anspruch 1,
**dadurch gekennzeichnet, dass**
die Regelungseinrichtungen (31.1, 31.2, 31.3) zur automatischen Berechnung der Gesamtnennleistung der an den ihnen jeweils zugeordneten Netzeinspeisepunkten (30.1, 30.2, 30.3) verbundenen Windenergieanlagen (10) ausgebildet ist.

3. Windpark nach Anspruch 1,
**dadurch gekennzeichnet, dass**
die Regelungseinrichtungen (31.1, 31.2, 31.3) zur automatischen Berechnung der Gesamtnennleistung der an den ihnen jeweils zugeordneten Netzeinspeisepunkten (30.1, 30.2, 30.3) verbundenen Windenergieanlagen (10) bei Änderung der Verbindung wenigstens einer Windenergieanlage (10) mit den Netzeinspeisepunkten (30.1, 30.2, 30.3) ausgebildet ist.

4. Windpark nach einem der vorhergehenden Ansprüche,
**dadurch gekennzeichnet, dass**
die Regelungseinrichtungen (31.1, 31.2, 31.3) an den einzelnen Netzeinspeisepunkten (30.1, 30.2, 30.3) so ausgelegt sind, dass sie anhand von Sollwerten für die Blindleistung und/oder Wirkleistung auf die Steuerung der über diesem Netzeinspeisepunkt (30.1, 30.2, 30.3) in das Versorgungsnetz (40) einspeisende Windenergieanlagen (10) einwirken, wobei vorzugsweise die Gesamtnennleistung der mit dem jeweiligen Netzeinspeisepunkt (30.1, 30.2, 30.3) verbundenen Windenergieanlagen (10) berücksichtigt wird.

5. Windpark nach einem der vorhergehenden Ansprüche,
**dadurch gekennzeichnet, dass**
die Regelungseinrichtungen (31.1, 31.2, 31.3) zum Senden von Sollwerten an die und/oder zum Empfang von Informationen von den an den ihnen jeweils zugeordneten Netzeinspeisepunkten (30.1, 30.2, 30.3) verbundenen Windenergieanlagen (10) ausgebildet sind.

6. Windpark nach einem der vorhergehenden Ansprüche,
**dadurch gekennzeichnet, dass**
alle Windenergieanlagen (10) beliebig und wahlweise mit einem der mehreren Netzeinspeisepunkte (30.1, 30.2, 30.3) verbindbar sind.

7. Verfahren zum Betreiben eines Windparks (1), wobei der Windpark (1) mehrere, mit einem windparkinternem Netz (20) verbundene Windenergieanlagen (10) und wenigstens zwei Netzeinspeisepunkte (30.1, 30.2, 30.3) umfasst und das windparkinterne Netz (20) wenigstens ein Schaltelement (21.1) umfasst, welches dazu ausgebildet ist, wenigstens eine Windenergieanlage (10) mit wahlweise einem der mehreren Netzeinspeisepunkte (30.1, 30.2, 30.3) variabel zu verbinden, wobei eine Windenergieanlage (10) anhand von Messwerten, die an einem ersten Netzeinspeisepunkt (30.1, 30.2, 30.3) erfasst werden, geregelt wird, solange die Windenergieanlage (10) über diesen ersten Netzeinspeisepunkt (30.1, 30.2, 30.3) Leistung in ein Versorgungsnetz (40) einspeist, und diese Windenergieanlage (10) anhand von Messwerten, die an einem zweiten Netzeinspeisepunkt (30.1, 30.2, 30.3) erfasst werden, geregelt wird, sobald die Windenergieanlage (10) über diesen zweiten Netzeinspeisepunkt (30.1, 30.2, 30.3) Leistung in das Versorgungsnetz (40) einspeist.

8. Verfahren nach Anspruch 7,
**dadurch gekennzeichnet, dass**
die Gesamtnennleistung der über einen Netzeinspeisepunkte (30.1, 30.2, 30.3) Leistung in das Versorgungsnetz (40) einspeisende Windenergieanlagen (10) berechnet wird.

9. Verfahren nach Anspruch 7 oder 8,
**dadurch gekennzeichnet, dass**
die Windenergieanlagen (10) anhand von Sollwerten für die Blindleistung und/oder Wirkleistung an demjenigen Netzeinspeisepunkt (30.1, 30.2, 30.3), mit dem die Windenergieanlagen (10) jeweils verbunden sind, geregelt wird, wobei vorzugsweise die Gesamtnennleistung der über einen Netzeinspeisepunkt (30.1, 30.2, 30.3) Leistung in das Versorgungsnetz (40) einspeisende Windenergieanlagen (10) berücksichtigt wird.

## Claims

1. Wind farm (1) comprising a plurality of wind turbines (10) which are connected to a network (20) within the wind farm, wherein a network feed-in point (30.1) for feeding electrical power into a supply network (40) is provided in the network (20) within the wind farm, and wherein a control device (31.1) associated with the network feed-in point (30.1) is provided, said control device being designed to control the wind turbines (10) which feed power into the supply network (40) via the network feed-in point (30.1) on the basis of measured values recorded at the network feed-in point (30.1), wherein at least one further network feed-in point (30.2, 30.3) is provided with a further control device (31.2, 31.3) which is designed to control the wind turbines (10) which feed power into the supply network (40) via the further network feed-in point (30.2, 30.3) on the basis of measured values recorded at the further network feed-in point (30.2, 30.3), wherein the network (20) within the wind farm comprises at least one switching element (21.1),
**characterized in that**
the switching element (21.1) is designed for the variable connection of at least one wind turbine (10) to selectively in each case one of the plurality of network feed-in points (30.1, 30.2, 30.3).

2. Wind farm according to Claim 1,
**characterized in that**
the control devices (31.1, 31.2, 31.3) are designed to automatically calculate the total nominal power of the wind turbines (10) which are connected at the network feed-in points (30.1, 30.2, 30.3) which are respectively associated with said control devices.

3. Wind farm according to Claim 1,
**characterized in that**
the control devices (31.1, 31.2, 31.3) are designed to automatically calculate the total nominal power of the wind turbines (10) which are connected at the network feed-in points (30.1, 30.2, 30.3) which are respectively associated with said control devices in the event of a change in the connection of at least one wind turbine (10) to the network feed-in points (30.1, 30.2, 30.3).

4. Wind farm according to any of the preceding claims, **characterized in that**
the control devices (31.1, 31.2, 31.3) at the individual network feed-in points (30.1, 30.2, 30.3) are configured such that, on the basis of setpoint values for the reactive power and/or active power, they act on the controller of the wind turbines (10) which feed into the supply network (40) via said network feed-in point (30.1, 30.2, 30.3), wherein the total nominal power of the wind turbines (10) connected to the respective network feed-in point (30.1, 30.2, 30.3) is preferably taken into account.

5. Wind farm according to any of the preceding claims, **characterized in that**
the control devices (31.1, 31.2, 31.3) are designed to transmit setpoint values to and/or to receive information from the wind turbines (10) which are connected at the network feed-in points (30.1, 30.2, 30.3) which are respectively associated with said control devices.

6. Wind farm according to any of the preceding claims, **characterized in that**
all of the wind turbines (10) are optionally and selectively connectable to one of the plurality of network feed-in points (30.1, 30.2, 30.3).

7. Method for operating a wind farm (1), wherein the wind farm (1) has a plurality of wind turbines (10) which are connected to a network (20) within the wind farm and comprises at least two network feed-in points (30.1, 30.2, 30.3) and the network (20) within the wind farm comprises at least one switching element (21.1) that is designed for the variable connection of at least one wind turbine (10) to selectively one of the plurality of network feed-in points (30.1, 30.2, 30.3), wherein a wind turbine (10) is controlled on the basis of measured values recorded at a first network feed-in point (30.1, 30.2, 30.3) as long as the wind turbine (10) is feeding power into a supply network (40) via said first network feed-in point (30.1, 30.2, 30.3), and said wind turbine (10) is controlled on the basis of measured values recorded at a second network feed-in point (30.1, 30.2, 30.3) as soon as the wind turbine (10) is feeding power into the supply network (40) via said second network feed-in point (30.1, 30.2, 30.3).

8. Method according to Claim 7,
**characterized in that**
the total nominal power of the wind turbines (10) which feed power into the supply network (40) via a network feed-in point (30.1, 30.2, 30.3) is calculated.

9. Method according to Claim 7 or 8,
**characterized in that**
the wind turbines (10) are controlled on the basis of setpoint values for the reactive power and/or active power at that network feed-in point (30.1, 30.2, 30.3) to which the wind turbines (10) are respectively connected, wherein the total nominal power of the wind turbines (10) which feed power into the supply network (40) via a network feed-in point (30.1, 30.2, 30.3) is preferably taken into account.

## Revendications

1. Parc éolien (1) comprenant une pluralité d'installations éoliennes (10) reliées à un réseau (20) interne au parc éolien, un point d'alimentation de réseau (30.1) étant prévu au niveau du réseau (20) interne au parc éolien pour alimenter un réseau d'alimentation (40) en énergie électrique, et un dispositif de régulation (31.1) étant prévu qui est associé au point d'alimentation de réseau (30.1) et qui est conçu pour régler les installations éoliennes (10) qui alimentent le réseau d'alimentation (40) en énergie par le biais du point d'alimentation de réseau (30.1) sur la base de valeurs de mesure acquises au niveau du point d'alimentation de réseau (30.1), au moins un autre point d'alimentation de réseau (30.2, 30.3) comprenant un autre dispositif de régulation (31.2, 31.3) étant prévu qui est conçu pour réguler les installations éoliennes (10), qui alimentent le réseau d'alimentation (40) énergie par le biais de l'autre point d'alimentation de réseau (30.2, 30.3), sur la base de valeurs de mesure acquises au niveau de l'autre point d'alimentation de réseau (30.2, 30.3), le réseau (20) interne au parc éolien comprenant au moins un élément de commutation (21.1),
**caractérisé en ce que**
l'élément de commutation (21.1) est conçu pour relier de manière variable au moins une installation éolienne (10) sélectivement à un point de la pluralité de points d'alimentation de réseau (30.1, 30.2, 30.3).

2. Parc éolien selon la revendication 1,
**caractérisé en ce que**
les dispositifs de régulation (31.1, 31.2, 31.3) sont conçus pour calculer automatiquement la puissance nominale totale des installations éoliennes (10) reliées aux points d'alimentation de réseau respectifs (30.1, 30.2, 30.3) qui leur sont associés.

3. Parc éolien selon la revendication 1,
**caractérisé en ce que**
les dispositifs de régulation (31.1, 31.2, 31.3) sont conçus pour calculer automatiquement la puissance nominale totale des installations éoliennes (10), reliées respectivement aux points d'alimentation de réseau (30.1, 30.2, 30.3) qui leur sont associés, en cas de modification de la liaison d'au moins une installation éolienne (10) aux points d'alimentation de réseau (30.1, 30.2, 30.3).

4. Parc éolien selon l'une des revendications précédentes, **caractérisé en ce que**
les dispositifs de régulation (31.1, 31.2, 31.3) au niveau des points d'alimentation de réseau individuels (30.1, 30.2, 30.3) sont conçus de manière à agir sur la commande des installations éoliennes (10), qui alimentent le réseau d'alimentation (40) par le biais de ces points d'alimentation de réseau (30.1, 30.2, 30.3), sur la base de valeurs de consigne de la puissance réactive et/ou de la puissance active, la puissance nominale totale des installations éoliennes (10) reliées au point d'alimentation de réseau respectif (30.1, 30.2, 30.3) étant de préférence prise en compte.

5. Parc éolien selon l'une des revendications précédentes, **caractérisé en ce que**
les dispositifs de régulation (31.1, 31.2, 31.3) sont conçus pour envoyer des valeurs de consigne et/ou pour recevoir des informations des installations éoliennes (10) reliées aux points d'alimentation de réseau respectifs (30.1, 30.2, 30.3) qui leur sont associés.

6. Parc éolien selon l'une des revendications précédentes, **caractérisé en ce que**
toutes les installations éoliennes (10) peuvent être reliées de manière quelconque à un point de la pluralité de points d'alimentation du réseau (30.1, 30.2, 30.3).

7. Procédé d'exploitation d'un parc éolien (1), le parc éolien (1) comprenant une pluralité d'installations éoliennes (10) reliées à un réseau (20) interne au parc éolien et au moins deux points d'alimentation de réseau (30.1, 30.2, 30.3) et le réseau (20) interne au parc éolien comprenant au moins un élément de commutation (21.1) conçu pour relier de manière variable au moins une installation éolienne (10) à un point de la pluralité de points d'alimentation de réseau (30.1, 30.2, 30.3), une installation éolienne (10) étant régulée sur la base de valeurs de mesure acquises au niveau d'un premier point d'alimentation de réseau (30.1, 30.2, 30.3) tant que l'installation éolienne (10) alimente un réseau d'alimentation (40) en énergie par le biais de ce premier point d'alimentation de réseau (30.1, 30.2, 30.3) et cette installation éolienne (10) étant régulée sur la base de valeurs de mesure acquises au niveau d'un deuxième point d'alimentation du réseau (30.1, 30.2, 30.3) dès que l'installation éolienne (10) alimente le réseau d'alimentation (40) en énergie par le biais de ce deuxième point d'alimentation de réseau (30.1, 30.2, 30.3).

8. Procédé selon la revendication 7,
**caractérisé en ce que**
la puissance nominale totale des installations éoliennes (10), qui alimentent le réseau d'alimentation (40) en énergie par le biais d'un point d'alimentation de réseau (30.1, 30.2, 30.3), est calculée.

9. Procédé selon la revendication 7 ou 8,
**caractérisé en ce que**
les installations éoliennes (10) sont régulées sur la base de valeurs de consigne de la puissance réactive et/ou de la puissance active au niveau des points d'alimentation de réseau (30.1, 30.2, 30.3) auxquels les installations éoliennes (10) sont respectivement reliées, la puissance nominale totale des installations éoliennes (10) qui alimentent le réseau d'alimentation (40) en énergie par le biais d'un point d'alimentation de réseau (30.1, 30.2, 30.3), étant de préférence prise en compte.
